# EUROPÄISCHE PATENTSCHRIFT

(11) **EP 3 117 690 B1**
(45) Veröffentlichungstag und Bekanntmachung des Hinweises auf die Patenterteilung: **19.08.2020**
(21) Anmeldenummer: 15709890.6
(22) Anmeldetag: 11.03.2015
(51) Int. Cl.: H05B 45/20, H05B 47/16, H05B 47/175, H05B 47/105

(54) **LEUCHTE ZUM AUSLEUCHTEN EINES GEBÄUDEBEREICHS, INSBESONDERE EINES BÜROS**
LAMP FOR ILLUMINATING A BUILDING REGION, IN PARTICULAR AN OFFICE
LAMPE SERVANT À ÉCLAIRER UNE ZONE D'UN BÂTIMENT, EN PARTICULIER UN BUREAU

(30) Priorität: 11.03.2014 DE 102014103197
(43) Veröffentlichungstag der Anmeldung: 18.01.2017
(73) Patentinhaber: Herbert Waldmann GmbH & Co. KG, 78056 Villingen-Schwenningen (DE)
(72) Erfinder: STOCKBURGER, Marc, 78052 Villingen-Schwenningen (DE); HAHN, Klaus-Jürgen, 78050 Villingen-Schwenningen (DE)
(74) Vertreter: Westphal, Mussgnug & Partner Patentanwälte mbB
(86) Internationale Anmeldenummer: PCT/EP2015/055005
(87) Internationale Veröffentlichungsnummer: WO 2015/135960

(56) Entgegenhaltungen:
- EP-A1- 2 205 045
- WO-A1-2007/003036
- WO-A1-2007/141713
- WO-A1-2013/067389
- DE-A1-102008 017 073
- DE-U1- 20 311 151

## Beschreibung

Die vorliegende Erfindung betrifft eine Leuchte zum Ausleuchten eines Gebäudebereichs, insbesondere eines Büros, umfassend Leuchtmittel zum Bereitstellen von Licht, eine Trägereinrichtung, auf welche das Leuchtmittel anbringbar ist, eine Steuereinheit zum Ansteuern der Leuchtmittel mit Steuerungsbefehlen, eine Kommunikationseinrichtung zur Kommunikation mit der Steuereinheit, wobei die Kommunikationseinrichtung einen Datenträger aufweist, in den von der Steuereinheit auslesbare Daten gespeichert sind zur Steuerung der Leuchte. Zusätzlich weisen solche Leuchten in der Regel selbst eine Stromquelle oder zumindest einen Anschluss für eine Stromquelle auf, um die Leuchte mit Energie zu versorgen.

Derartige Leuchten sind auch unter dem Begriff "intelligente Leuchten" bekannt und werden zur Beleuchtung von Gebäudebereichen und insbesondere von Großraumbüros eingesetzt. Häufig haben diese Leuchten zusätzlich Mittel zur Präsenzerkennung. Diese Mittel bestehen in der Regel aus einem Detektor zum Erfassen der Anwesenheit von Personen in einem Umfeld der Leuchte, so dass die Leuchte bei der Detektion von Personen automatisch einschalten kann und nach einer bestimmten Nachlaufzeit dann die Leuchte selbsttätig ausgeschaltet wird, wenn sich nach einer bestimmten Zeit keine Person mehr im Umfeld der Leuchte befindet. Im Rahmen der Beschreibung der vorliegenden Erfindung sollen die Gebäudebereiche auch den Eingangsbereich von Gebäuden umfassen, so dass die erfindungsgemäße Leuchte auch außerhalb des Gebäudes angeordnet werden kann.

Die DE 10 2006 057 755 A1 offenbart ein steuerbares Beleuchtungssystem mit einer Anzahl von intelligenten Leuchten, die über Kabel miteinander verbunden sind und in Abhängigkeit vom Tageslicht oder nach Maßgabe einer Bewegung der im Bereich der Beleuchtungsanlage befindlichen Personen oder Tiere gesteuert wird. Zusätzlich wird eine Steuerung der Beleuchtungsanlage beschrieben, bei der in Abhängigkeit von der Position der Person einzelne Leuchten oder Leuchtengruppen zurückgedimmt oder abgeschaltet werden, wenn sich kein Benutzer im Raum befindet. Bei Meldung von Anwesenheit oder fehlender Meldung einer Anwesenheit von Personen oder Tieren werden entsprechende Steuerbefehle für die gesamte Beleuchtungsanlage generiert.

Ein anderes Beleuchtungssystem mit einer Anzahl von intelligenten Leuchten beschreibt die EP 2 048 916 B1. Dort sind die Leuchten über ein drahtgebundenes Leuchtennetzwerk mit Bedien- und/oder Sensorelementen verbunden. Wesentlich bei diesem Leuchtennetzwerk ist, dass jede der Leuchten über eine ein- oder mehradrige Informationssignalleitung verfügt, die in die Stromversorgungsschienen eingefügt und damit Bestandteil der gemeinsamen Stromversorgungseinrichtung ist. Dadurch ist es möglich, dass jede der Leuchten drahtgebunden Informationen an die übrigen Leuchten versenden kann. Wenn ein der Leuchte direkt zugeordnetes Bedien- und/oder Sensorelement ein Stellsignal auslöst, kann die Leuchte dieses Stellsignal nicht nur bei sich selbst zur Ansteuerung des Leuchtmittels umsetzen, sondern auch an die anderen Leuchten des Netzwerkes über den drahtgebundenen Informationsübermittlungskanal weitergeben. Die Informationssignalleitung ist insbesondere als Ein- oder Mehrdrahtbus ausgebildet.

Auch die DE 10 2011 002 478 A1 zeigt ein drahtgebundenes Beleuchtungssystem.

Problematisch bei solchen drahtgebundenen, intelligenten Beleuchtungssystemen ist die Tatsache, dass ein verhältnismäßig hoher Installationsaufwand erforderlich ist, der umso größer wird, je mehr Leuchten in die gesamte Beleuchtungsanlage integriert werden sollen. Zudem ist eine Veränderung der Beleuchtungsanlage, d. h. ein Umstellen der einzelnen Leuchten z. B. in Großraumbüros oder ein Austausch zwischen verschiedenen Räumen schwierig. Zudem muss ein besonderer drahtgebundener Kommunikationskanal vorgehalten werden, um eine solche intelligente Beleuchtungsanlage überhaupt zu ermöglichen.

Die DE 10 2012 204 579 A1 beschreibt ein intelligentes Beleuchtungssystem, bei dem die Leuchten eine Kommunikationseinrichtung drahtlos kommunizieren. Hierbei können einzelne Leuchten zu Gruppen zusammengefasst werden, so dass nur Leuchten, die sich in einem bestimmten Abschnitt eines Großraumbüros oder auf einer bestimmten Etage eines Gebäudes befinden, ein- oder ausgeschaltet oder auf eine bestimmte Beleuchtungsstärke gedimmt werden. Hierbei sind in den Leuchten beispielsweise drei Beleuchtungsstärken hinterlegt, die nach festen Regeln eingestellt werden, um Lichtinseln zu vermeiden. So können die Leuchten Detektoren enthalten, welche die Anwesenheit von Personen im Umfeld der Leuchten erkennen, so dass zunächst sich diejenige Leuchte einschaltet, die sich am nächsten zum Eingang befindet, wenn sich eine Person das Büro betritt. Hierbei kann die die Leuchte auf die zweite Beleuchtungsstärke gestellt werden. Gleichzeitig werden die übrigen Leuchten auf die erste Beleuchtungsstärke geschaltet. Geht die Person zu seinem Arbeitsplatz, so werden diejenigen Leuchten auf die zweite Beleuchtungsstärke gestellt, welche die Anwesenheit der Person in ihrer Umgebung feststellen. Die übrigen werden auf die erste Beleuchtungsstärke zurückgestellt.

Auch WO2013/067389 A1, EP 2 205 045 A1 und WO2007/003036 A1 offenbaren beispielsweise den Stand der Technik.

Die Regeln, nach denen die verschiedenen Leuchten angesteuert werden, sind fest vorgegeben und können nicht geändert werden. Nur die Zuordnung der einzelnen Lampen zu einer bestimmten Gruppe kann geändert werden. Eine zeitabhängige Ansteuerung der Leuchten ist ebenfalls nicht möglich.

Ziel der vorliegenden Erfindung ist es, die Leuchte der eingangs genannten Art so weiterzubilden, dass sie unabhängig von einem Beleuchtungs- oder Datennetzwerk flexibel und insbesondere zeitabhängig ansteuerbar sind.

Erreicht wird dieses Ziel mit einer Leuchte nach Anspruch 1 sowie mit einem Beleuchtungssystem nach Anspruch 6 und einem Verfahren nach Anspruch 7. Vorteilhafte Weiterbildungen sind Gegenstand der Unteransprüche.

Die Erfindung beruht im Wesentlichen darauf, dass in oder an der Leuchte ein Zeitmodul angeordnet ist zum selbstständigen Bereitstellen der aktuellen Uhrzeit und gegebenenfalls eines aktuellen Datums. Die in dem vorzugsweise lösbar an der Leuchte befestigten Datenträger gespeicherten Daten sind nach Maßgabe der von diesem Zeitmodul bereitgestellten Zeitinformation zur zeitabhängigen Steuerung der Leuchte auslesbar. Da die Leuchte erfindungsgemäß ein Zeitmodul aufweist, ist kein externer Zeitgeber notwendig. Die Leuchte kann somit in komplexer Weise zeitabhängig angesteuert werden, ohne dass ein Daten- oder Beleuchtungsnetzwerk, also eine irgendwie geartete Verkabelung außerhalb der Leuchte erforderlich ist. Die Leuchte ist somit autark. Die Zeitinformationen der Daten werden mit der aktuellen Uhrzeit und vorzugsweise auch mit dem aktuellen Datum synchronisiert. Geben die Daten folglich vor, dass eine Aktion zu einem bestimmten Datum und zu einer bestimmten Uhrzeit ausgeführt werden soll, so vergleicht die Steuereinheit das aktuelle Datum und die aktuelle Uhrzeit mit denen, welche die Daten vorgibt. Wenn das Datum und die Uhrzeit übereinstimmen, wird die vorgegebene Aktion ausgeführt. Die Steuereinheit setzt die Daten in entsprechende Steuerbefehle um, mit denen beispielsweise die Leuchtmittel eingeschaltet oder gedimmt werden können, um die Beleuchtungsstärke zu ändern. Das Leuchtmittel kann auch eine Anzahl von LEDs ("lightemitting diodes") umfassen, so dass zum Ändern der Beleuchtungsstärke einige der LEDs ein- oder ausgeschaltet werden.

Es können ganz unterschiedliche Parameter berücksichtigt werden. Beispielsweise dann, wenn die Leuchte zum Ausleuchten eines Büros verwendet wird, kann die Leuchte an Werktagen anders betrieben wird als am Wochenende oder an Feiertagen. Ferner können Bürozeiten berücksichtigt werden, so dass die Leuchte während der Bürozeiten anders angesteuert wird als außerhalb der Bürozeiten. Über das Datum können Sommer- und Winterzeiten berücksichtigt werden. Wenn das Büro nicht besetzt ist, können einzelne oder alle Leuchtmittel ausgeschaltet sein. Dennoch kann es aus Sicherheitsgründen sinnvoll sein, auch außerhalb der Bürozeiten die Leuchte für einen bestimmten Zeitraum einzuschalten oder die Beleuchtungsstärke in bestimmten Abständen zu ändern.

Erfindungsgemäß ist, die Farbe des von den Leuchtmitteln abgegebenen Lichts zeitabhängig zu ändern. Beispielsweise kann morgens ein Blauton und abends ein Orangeton eingestellt werden, um die Beleuchtung an den Biorhythmus der Personen, die im Büro arbeiten, anzupassen, d. h. eine möglichst dem Tagesablauf natürliche Beleuchtungssituation zu schaffen. Der von den Daten definierte zeitliche Ablauf gemäß den obigen Ausführungen, mit dem die Leuchtmittel angesteuert werden, wird im Folgenden als "Beleuchtungsmuster" bezeichnet werden.

Das auf dem Datenträger definierte Beleuchtungsmuster kann dabei ab Werk vorgegeben sein, wobei dem Käufer bei der Bestellung der Leuchte die Möglichkeit gegeben werden kann, individuelle Vorgaben zu machen, beispielsweise hinsichtlich der Bürozeiten oder der Farben.

Die Mittel zur Präsenzerkennung von Personen im Umfeld der Leuchte, z. B. ein Detektor zum Erfassen der Anwesenheit einer Person im Umfeld der Leuchte kann dabei per Ultraschall, per Infrarotdetektion (z. B. mittels Passiv-Infrarot-Sensoren), mit Radar oder ähnlichem arbeiten. Wichtig ist, dass Personen auch dann erfasst werden, wenn sie am Schreibtisch arbeiten und somit nur eine geringe Bewegungsaktivität ausüben.

Insofern ist es möglich, die erfindungsgemäße Leuchte so anzusteuern, dass sie eine für die Personen angenehme Ausleuchtung bereitstellt, gleichzeitig aber den Energieverbrauch minimiert, ohne dass eine externe Infrastruktur vorhanden sein oder bereitgestellt werden muss.

Erfindungsgemäß ist der Datenträger als ein portables Speichermedium ausgeführt. In dieser Ausgestaltung ist der Datenträger nicht fest in der Leuchte montiert, sondern kann jederzeit von einem Benutzer mit der Leuchte verbunden und von ihr getrennt werden. Hierdurch wird der wesentliche Vorteil erreicht, dass der Benutzer unterstützt von einem Computer und einer Software das Beleuchtungsmuster komfortabel und wunschgemäß entwerfen und das fertig definierte Beleuchtungsmuster auf dem portablen Speichermedium abspeichern kann. Anschließend kann er das portable Speichermedium mit der Leuchte verbinden, so dass die Leuchte mit dem selbst definierten Beleuchtungsmuster betrieben werden kann. Änderungen des Beleuchtungsmusters lassen sich so schnell umsetzen, um beispielsweise für einen bestimmten Anlass ein besonderes Beleuchtungsmuster zu haben, oder das Beleuchtungsmuster auf Änderungen der Büroausstattung oder der Möbelanordnung im Büro anzupassen.

Vorzugsweise umfasst die Kommunikationseinrichtung einen SD-Schacht zum Einbringen einer SD-Karte, eine USB-Schnittstelle zum Anschließen eines USB-tauglichen Geräts und/oder eine Drahtlosschnittstelle zum drahtlosen Kommunizieren mit einem entsprechend eingerichteten Gerät. Andere geeignete Schnittstellen, die als Alternative zur USB-Schnittstelle verwendet werden können, sind ebenfalls denkbar. Dem Käufer der Leuchte kann eine Software mitgeliefert werden, mit der er das gewünschte Beleuchtungsmuster, an einem Computer definieren kann. Das fertig definierte Beleuchtungsmuster wird dann auf einem USB-Stick oder einer SD-Karte hinterlegt, die anschließend mit der Leuchte verbunden werden, so dass die Daten der Steuereinheit zur Verfügung gestellt werden. In diesem Ausführungsbeispiel übernehmen der USB-Stick oder die SD-Karte die Funktion des Datenträgers, der in diesem Fall nicht fest in der Leuchte angeordnet, sondern portabel ist. Alternativ kann der Computer direkt an die USB-Schnittstelle angeschlossen werden und das Beleuchtungsmuster auf dem Datenträger, der fest in oder an der Leuchte angeordnet ist, abgelegt werden. Selbiges kann auch über die Drahtlosschnittstelle erfolgen, so dass das Beleuchtungsmuster beispielsweise auf einem Smartphone mittels einer App entworfen und über die Drahtlosschnittstelle an den fest in der Leuchte angeordneten Datenträger übermittelt und dort abgelegt werden kann.

Auf diese Weise ist es möglich, das Beleuchtungsmuster flexibel und einfach zu entwerfen und an die Leuchte zu übertragen. Zudem kann das Beleuchtungsmuster einfach geändert werden, beispielsweise dann, wenn die Leuchte an einen anderen Standort verlegt wird. Die Software kann eine Funktion aufweisen, welche den Energieverbrauch pro Zeiteinheit, beispielsweise pro Woche oder Monat, berechnet, so dass der Benutzer den Energieverbrauch selbst bestimmen und optimieren kann.

In einer bevorzugten Ausgestaltung weist die Leuchte eine Übertragungseinrichtung auf, mit welcher die Steuerbefehle zu einer Anzahl von Nebenleuchten übertragbar sind, wobei die Nebenleuchten mit den Steuerbefehlen ansteuerbar sind und eine mit der Übertragungseinrichtung kommunizierende Empfangseinrichtung zum Empfangen der Steuerbefehle aufweisen. Die Leuchte selbst übernimmt hierbei die Funktion einer Masterleuchte, über deren Übertragungseinrichtung die Steuerbefehle an die Nebenleuchten übermittelt werden, die dann mit dem entsprechenden Beleuchtungsmuster betrieben werden. Diese Masterleuchte lernt quasi die Nebenleuchten ein.

Die Nebenleuchten können äußerlich identisch zur Masterleuchte ausgestaltet sein, müssen aber selbst keine eigene Kommunikationseinrichtung und keinen eigenen Datenträger aufweisen bzw. müssen nicht mit einem externen Datenträger kommunizieren können. Die Nebenleuchten müssen nur so eingerichtet sein, dass die Leuchtmittel der Nebenleuchten über die von der Empfangseinrichtung empfangenen Steuerbefehle ansteuerbar sind. Folglich können die Nebenleuchten etwas einfacher aufgebaut sein, so dass sie kostengünstiger zu fertigen sind. Es ist aber genauso gut möglich, aus einer Anzahl von identischen Masterleuchten eine Masterleuchte per Software als die eigentliche Masterleuchte und die anderen Masterleuchten als Nebenleuchten zu definieren.

Weiterhin stellt es für den Benutzer eine Vereinfachung dar, wenn er das Beleuchtungsmuster nur über die Masterleuchte einspeisen muss. Vorzugsweise werden die Steuerbefehle drahtlos an die Nebenleuchten übertragen, so dass die Installation und die Änderung des Standorts der Leuchten einfach zu bewerkstelligen ist. Die Empfangseinheit der Nebenleuchten kann auch so eingerichtet sein, dass sie selbst Signale aussenden kann, die wiederum von der Übertragungseinrichtung der Masterleuchte empfangen werden können. Insbesondere kann sich eine bestimmte Nebenleuchte hierdurch eindeutig identifizieren. Folglich kann einer bestimmten Nebenleuchte ein anderes Beleuchtungsmuster zugewiesen werden als der Masterleuchte oder einer anderen Nebenleuchte. Ferner ist es möglich, eine oder mehrere Nebenleuchten zu einer oder mehreren Gruppen zusammenzufassen, denen ein anderes Beleuchtungsmuster zugewiesen wird als der Masterleuchte oder anderen Nebenleuchten oder anderen Gruppen. Die Masterleuchte kann selbst ein Teil einer Gruppe sein. Die Software, mit der das Beleuchtungsmuster erstellt wird, kann entsprechende Funktionen aufweisen. Folglich kann der Benutzer jeder Nebenleuchte, jeder Gruppe und/oder der Masterleuchte sehr komplexes Beleuchtungsmuster individuell zuordnen, wobei die Beleuchtungsmuster ausschließlich über die Masterleuchte eingespeist werden müssen. Somit lassen sich sehr komplexe Beleuchtungsmuster auf einfache und schnelle Weise realisieren.

Ein weiterer Aspekt betrifft ein Beleuchtungssystem zum Ausleuchten eines Gebäudebereichs, insbesondere eines Büros, umfassend eine Leuchte nach einem der zuvor diskutierten Ausführungsbeispiele, die eine Übertragungseinrichtung aufweist, eine Anzahl von Nebenleuchten, die mittels der Leuchte ansteuerbar sind, wobei die Nebenleuchten eine mit der Übertragungseinrichtung kommunizierende Empfangseinrichtung aufweisen. Es kann ein eigenes Leuchtennetzwerk aufgebaut werden, ohne dass hierzu ein großer Einrichtungs- und Montageaufwand notwendig ist. Die weiteren Vorteile und technischen Effekte, die sich mit dem erfindungsgemäßen Beleuchtungssystem erzielen lassen, entsprechen denjenigen, die für die erfindungsgemäße Leuchte beschrieben worden sind.

Die Aufgabe wird weiterhin durch ein Verfahren zum Ausleuchten eines Gebäudebereichs, insbesondere eines Büros, mit einer Leuchte nach einem der zuvor genannten Ausführungsbeispiele gelöst, welches folgende Schritte umfasst:
- Auslesen von Daten, die auf dem Datenträger gespeichert sind, mittels der Kommunikationseinrichtung und Übertragen an die Steuereinheit,
- Synchronisieren der in den Daten enthaltenen Zeitinformationen mit der vom Zeitmodul bereitgestellten Uhrzeit mittels der Steuereinheit,
- Umwandeln der Daten in Steuerbefehle mittels der Steuereinheit, und
- Ansteuern der Leuchtmittel mittels der Steuereinheit nach Maßgabe der vom Zeitmodul bereitgestellten Informationen.

Mit dem erfindungsgemäßen Verfahren ist es möglich, die Leuchte autark und unabhängig von einem Leuchten- oder Datennetzwerk zeitabhängig anzusteuern, so dass ein zeitabhängiges Beleuchtungsmuster realisiert werden kann, was dennoch wenig Energie benötigt. Ferner kann die Anwesenheit einer Person berücksichtigt werden, wobei typischerweise die Leuchtmittel nur dann wie von den Daten vorgeschrieben angesteuert werden, wenn sich eine Person im Büro anwesend ist. Diese bedeutet bspw., dass ein abgespeichertes Beleuchtungsmuster nur dann von der Leuchte bzw. dem Leuchtmittel abgegeben wird, wenn tatsächlich Präsenz einer Person im Bereich der Leuchte erkannt wird. Besteht bspw. das Beleuchtungsmuster darin, die Intensität und/oder die Farbe des abgestrahlten Lichts innerhalb eines vorgegeben Zeitintervalls eines Tages zu verändern, also bspw. von 7:00 Uhr bis 19:00 Uhr, so wird dies nur dann getan, wenn tatsächlich eine Person von den Mitteln zur Präsenzerkennung der Leuchte erfasst ist. Ist eine solche Person nicht im Bereich der Leuchte erfasst, bleibt die Leuchte dagegen in Ihrem Auszustand. Betritt die Person dagegen den Bereich der Leuchte, wird das genannte Beleuchtungsmuster von der Leuchte aktiviert. Der Erfindung zufolge wird also bei Präsenzerkennung nicht nur die Leuchte eingeschaltet, sondere das auf dem mobilen Datenträger abgespeicherte Beleuchtungsmuster entsprechend der jeweiligen Programmierung in der Steuereinheit von der Leuchte verwirklicht. Zusätzlich ist es auch möglich oder unabhängig davon, dass auf dem portablen Datenträger auch weitere Steuerfunktionen für die Leuchte abgespeichert sind. So können bspw. Informationen in dem portablen Datenträger abgelegt werden, ob die Leuchte ihre Mittel zur Präsenzerkennung überhaupt aktiviert oder nicht. So kann bspw. für einen bestimmten Zeitraum während eines Tages, üblicherweise die Bürozeiten, die Präsenzerkennung "scharf" gestellt werden. Für die übrigen Zeiten ist dagegen die Präsenzerkennung ausgeschaltet.

Für den Fall, dass sich eine Person zu einer sehr ungewöhnlichen Zeit, beispielsweise mitten in der Nacht, im Büro aufhält, kann absichtlich keine Ansteuerung der Leuchtmittel erfolgen oder eine Ansteuerung der Leuchtmittel erfolgen, die einem optischen Alarm entspricht, beispielsweise ein rotes Blinken, um der Person, die potentiell ein Einbrecher sein könnte, den Aufenthalt im so unangenehm wie möglich zu machen und andere Personen aufmerksam zu machen.

Weitere Vorteile und technische Effekte des erfindungsgemäßen Verfahrens entsprechen denjenigen, die für die erfindungsgemäße Leuchte beschrieben worden sind.

Vorzugsweise wird das erfindungsgemäße Verfahren dadurch weitergebildet, dass die Leuchtmittel mittels der Steuereinheit ausgeschaltet werden, sobald die Mittel zur Präsenzerkennung die Abwesenheit von Personen festgestellt haben.. Für den Fall, dass sich während der Bürozeiten aufgrund eines Betriebsausflugs oder anderen Ereignissen keine Personen im Büro befinden, ist es nicht notwendig, ein Beleuchtungsmuster abzufahren. Durch Ausschalten der Leuchtmittel kann folglich Energie eingespart werden. Es kann aber vorgegeben sein, dass die Leuchtmittel im Falle der Abwesenheit von Personen nur innerhalb eines bestimmten Zeitraums ausgeschaltet werden. Bei Abwesenheit von Personen außerhalb des Zeitraums kann das Leuchtmittel beispielsweise auf eine niedrige Beleuchtungsstärke gedimmt werden.

Eine Fortbildung des erfindungsgemäßen Verfahrens zeichnet sich durch folgende Schritte aus:
- Übertragen der Steuerbefehle zu einer Anzahl von Nebenleuchten mittels einer Übertragungseinrichtung,
- Empfangen der Steuerbefehle mit einer mit der Übertragungseinrichtung kommunizierenden Empfangseinrichtung, und
- Ansteuern von Nebenleuchten mit den Steuerbefehlen.

Die hiermit erzielbaren Vorteile und technischen Effekte entsprechen denjenigen, die für die erfindungsgemäße Leuchte und die Nebenleuchten diskutiert worden sind.

Ein weiterer Aspekt der Erfindung betrifft die Verwendung der erfindungsgemäßen Leuchte und/oder des erfindungsgemäßen Beleuchtungssystems zum Ausleuchten eines Gebäudebereichs, insbesondere eines Büros.

Die Erfindung wird im Folgenden anhand von bevorzugten Ausführungsbeispielen unter Bezugnahme auf die anhängenden Zeichnungen im Detail beschrieben. Es zeigen
- Figur 1a): eine prinzipielle Darstellung einer erfindungsgemäßen Leuchte,
- Figur 1b): eine detaillierte Darstellung einer ersten Ausführungsform des Ausschnitts X der Figur 1a),
- Figur 1c): eine detaillierte Darstellung einer zweiten Ausführungsform des Ausschnitts X der Figur 1a),
- Figur 2: eine prinzipielle Darstellung eines erfindungsgemäßen Beleuchtungssystems,
- Figur 3: eine tabellarische Darstellung von Steuerbefehlen gemäß der erfinderischen Idee,
- Figur 4: eine graphische Darstellung der Steuerbefehle gemäß der erfinderischen Idee und
- Figur 5: das Beispiel für eine tagesablaufabhängige Ansteuerung einer Leuchte nach Maßgabe von in einer SD-Karte abgelegten Zeitinformationen.

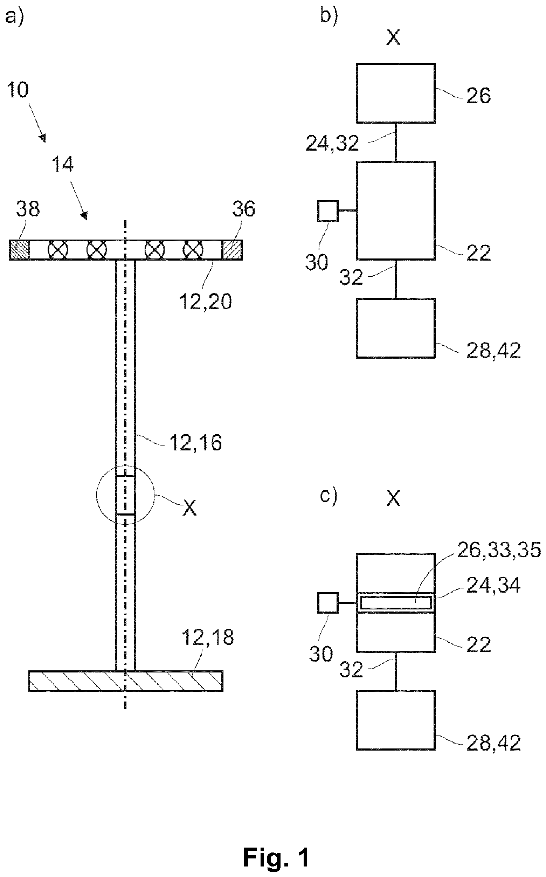

In Figur 1a) ist eine erfindungsgemäße Leuchte 10 anhand einer Prinzipskizze dargestellt. Die Leuchte 10 weist eine Trägereinrichtung 12 auf, auf der ein Leuchtmittel 14 angebracht ist. Im dargestellten Beispiel umfasst die Trägereinrichtung 12 eine Leuchtenstange 16, die an einem Leuchtenfuß 18 montiert ist. Weiterhin umfasst die Trägereinrichtung 12 ein Leuchtengehäuse 20, in welchem das Leuchtmittel 14 angeordnet ist, das im dargestellten Beispiel vier LEDs aufweist. Je nach Gestaltung des Leuchtengehäuses 20 und nach Ausrichtung der LEDs strahlt die Leuchte 10 Licht nach oben, unten und/oder zur Seite ab. Die Länge der Leuchtenstange 16 sowie die Ausgestaltung des Leuchtenfußes 18 und des Leuchtengehäuses 20 können so variiert werden, dass die Leuchte 10 als Stand-, Tisch-, Wand oder Deckenleuchte verwendet werden kann, wobei die Ausführung als Stand- oder Tischleuchte bevorzugt ist.

In der Leuchtenstange 16 ist eine Steuereinheit 22, eine Kommunikationseinrichtung 24, ein Datenträger 26, ein Zeitmodul 28 und eine Energiequelle 30 angeordnet, die in Figur 1b) und Figur 1c) genauer dargestellt sind. Die Energiequelle 30 kann als Batterie, Akkumulator oder Powercap ausgebildet sein, so dass keine Steckdose vorhanden sein muss, um die Leuchte erfindungsgemäß betreiben zu können. Anstelle der Energiequelle 30 können auch lediglich Anschlüsse für eine Energiequelle, z. B. ein Stromnetz vorhanden sein. Allerdings ist die Leuchte 10 dann darauf angewiesen, dass sich ein Stromanschluss in der Nähe der Leuchte 10 befindet. Die Steuereinheit 22 dient zum Ansteuern der Leuchtmittel 14, wozu sie Steuerbefehle generiert, die über nicht dargestellte Drähte an die Leuchtmittel 14 übertragen werden. Die Kommunikationseinrichtung 24 dient zur Kommunikation zwischen der Steuereinheit 22 und einem Datenträger 26. In Figur 1b) ist die Kommunikationseinrichtung 24 als eine elektrische Leitung 32 ausgeführt, wobei der Datenträger 26 in oder an der Leuchtenstange 16 angeordnet ist. In Figur 1c) ist der Datenträger 26 als ein portables Speichermedium 33 ausgebildet, wobei die Kommunikationseinrichtung 24 einen SD-Schacht 34 umfasst, in den das als eine SD-Karte 35 ausgebildete portable Speichermedium 33 eingeschoben werden kann. Der SD-Schacht 34 kann über nicht dargestellte elektrische Leitungen oder über andere elektrisch leitende Verbindungen mit der Steuereinheit 22 verbunden sein.

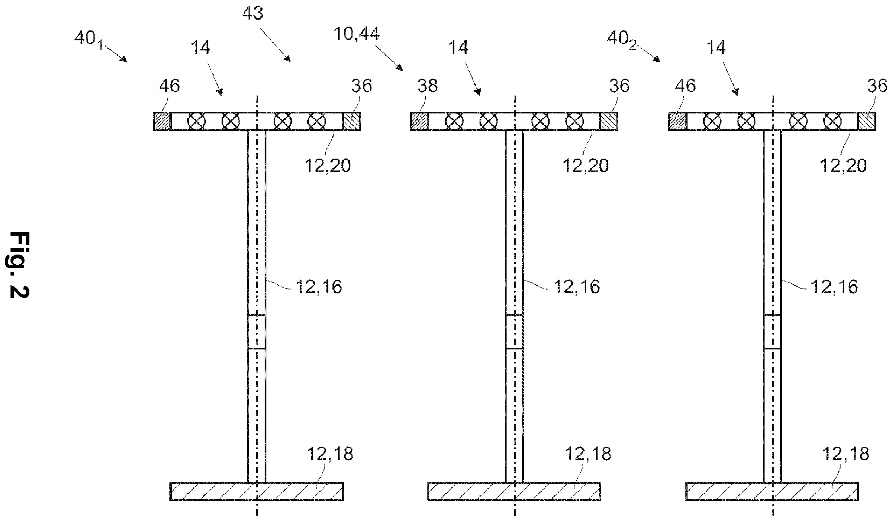

Darüber hinaus umfasst die erfindungsgemäße Leuchte 10 einen Detektor 36 (siehe Figur 1a)), mit dem die Anwesenheit von Personen innerhalb eines Umfeldes der Leuchte 10 erfasst werden kann. Weiterhin weist die erfindungsgemäße Leuchte 10 eine Übertragungseinrichtung 38 auf, mit der die Steuerbefehle zu einer Anzahl von Nebenleuchten 40 übertragbar sind, was in Bezug auf Figur 2 noch näher erläutert wird. Darüber hinaus kann die Leuchte 10 einen nicht dargestellten Schalter zum manuellen Ein- und Ausschalten der Leuchtmittel 14 aufweisen.

In Bezug auf die in Figur 1b) dargestellte Ausgestaltung wird die erfindungsgemäße Leuchte 10 wie folgt betrieben: Auf dem Datenträger 26 sind Daten gespeichert, die von der Steuereinheit 22 ausgelesen und in entsprechende Steuerbefehle umgewandelt werden können. Mit den Steuerbefehlen können die LEDs der Leuchtmittel 14 beispielsweise ein- oder ausgeschaltet oder gedimmt werden. Die vier LEDs können unterschiedliche Farben aufweisen, beispielsweise weiß, rot, grün und blau, so dass durch ein entsprechendes Ansteuern dem ausgestrahlten Licht eine bestimmte Farbe aufgeprägt kann.

Die Daten enthalten insbesondere eine Zeitinformation, wonach ein bestimmter Steuerbefehl zu einem ganz bestimmten Zeitpunkt ausgeführt werden soll, also zu einer ganz bestimmten Uhrzeit. Um dies zu ermöglichen, liefert das Zeitmodul 28 die aktuelle Uhrzeit und vorzugsweise auch das aktuelle Datum. Das Zeitmodul 28 kann dabei als eine Echtzeituhr 42 ausgestaltet sein, die einen Empfänger aufweisen kann, der ein von einem Zeitzeichensender per Funk ausgestrahltes Zeitsignal empfangen kann. Hierdurch kann die Echtzeituhr ähnlich wie bei einem Funkwecker regelmäßig synchronisiert werden, so dass die vom Zeitmodul 28 gelieferte Uhrzeit sehr genau ist. Das Zeitmodul kann aber auch unabhängig von Funkuhrsignalen ausgebildet sein, indem z. B. ein auf einer Quarzzeitbasis arbeitendes Zeitmodul zum Einsatz kommt. Die Steuereinheit 22 entnimmt in kurzen Abständen dem Zeitmodul 28 die aktuelle Uhrzeit und das aktuelle Datum. Sobald die von den Daten gelieferte Zeitinformation für einen bestimmten Steuerbefehl mit dem aktuellen Datum und der aktuellen Uhrzeit übereinstimmt, führt die Steuereinheit 22 den Steuerbefehl aus. Dabei sind die Daten werkseitig bereits auf dem Datenträger 26 hinterlegt.

Bei dem in Figur 1c) dargestellten Ausführungsbeispiel wird prinzipiell genauso vorgegangen, wobei jedoch die Daten auf der SD-Karte 35 hinterlegt sind, die auf Wunsch des Benutzers in den SD-Schacht 34 eingebracht und wieder aus ihm entnommen werden kann. Folglich übernimmt in diesem Fall die SD-Karte 35 die Funktion des Datenträgers 26. Der Benutzer kann beispielsweise an einem Computer mit einer speziellen Software individuelle Beleuchtungsmuster erzeugen und auf der SD-Karte 35 ablegen. Anschließend bringt er die SD-Karte 35 in den SD-Schacht 34 ein. Die Steuereinheit 22 liest die entsprechenden Daten von der SD-Karte 35 aus und wandelt sie in zeitabhänge Steuerbefehle um. Wiederum entnimmt die Steuereinheit 22 dem Zeitmodul 28 die aktuelle Uhrzeit und das aktuelle Datum, so dass sie die Leuchtmittel 14 mit den Steuerbefehlen zum gewünschten Zeitpunkt ansteuert.

Die Daten können auch die Anwesenheit einer Person im Umfeld der Leuchte 10 berücksichtigen. So ist es möglich, bestimmte Beleuchtungsmuster nur dann abzufahren, wenn sich eine Person im Umfeld der Leuchte 10 aufhält. Auch ist es möglich, bei Anwesenheit einer Person zu einem ersten Zeitpunkt ein erstes Beleuchtungsmuster und bei Anwesenheit einer Person zu einem zweiten Zeitpunkt ein zweites Beleuchtungsmuster abzufahren. Der Detektor 36 liefert die Information, ob sich eine Person im Umfeld der Leuchte 10 befindet oder nicht.

In Figur 2 ist ein erfindungsgemäßes Beleuchtungssystem 43 anhand einer Prinzipskizze dargestellt. Es umfasst eine erfindungsgemäße Leuchte 10 und eine Anzahl der Nebenleuchten 40. Im dargestellten Beispiel soll die erfindungsgemäße Leuchte 10 als Masterleuchte 44 bezeichnet werden. Zudem sind zwei Nebenleuchten 401 und 402 vorhanden. Die Masterleuchte 44 weist den zuvor beschriebenen Aufbau auf, während die Nebenleuchten 401, 402 anstelle der Übertragungseinrichtung 38 eine Empfangseinrichtung 46 aufweisen, mit denen die von der Übertragungseinrichtung 38 ausgesendeten Steuerbefehle empfangen werden. Es wird also ein Leuchtennetzwerk aufgebaut. Zwar können im Übrigen die Nebenleuchten 40 genauso aufgebaut sein wie die Masterleuchte 44, allerdings ist es ausreichend, wenn die Leuchtmittel 14 der Nebenleuchten 401, 402 mit den empfangenen Steuerbefehlen angesteuert werden können. Insbesondere benötigen die Nebenleuchten 401, 402 keinen eigenen Datenträger 26 und kein eigenes Zeitmodul 28.

Die Nebenleuchten 401, 402 können folglich mit demselben Beleuchtungsmuster betrieben werden wie die Masterleuchte 44. Es ist aber auch möglich, dass die Nebenleuchten 40 nur dann mit einem bestimmten Beleuchtungsmuster betrieben werden, wenn sich eine Person in ihrem Umfeld befindet. Auch können die Nebenleuchten 401, 402 das Beleuchtungsmuster zeitversetzt oder ein anderes Beleuchtungsmuster abfahren. Die Empfangseinrichtung 46 der Nebenleuchten 401, 402 kann so ausgestaltet sein, dass sie Informationen an die Übertragungseinrichtung 38 der Masterleuchte 44 senden, beispielsweise ihre eigene Identifikation. Folglich kann die Masterleuchte 44 mit einem ersten Beleuchtungsmuster, die erste Nebenleuchte 401 mit einem zweiten und die zweite Nebenleuchte 402 mit einem dritten Beleuchtungsmuster betrieben werden. Es ist aber auch möglich, die beiden Nebenleuchten 40 oder die Masterleuchte 44 und eine der Nebenleuchten 401, 402 zu einer Gruppe zusammenzufassen und gleich anzusteuern.

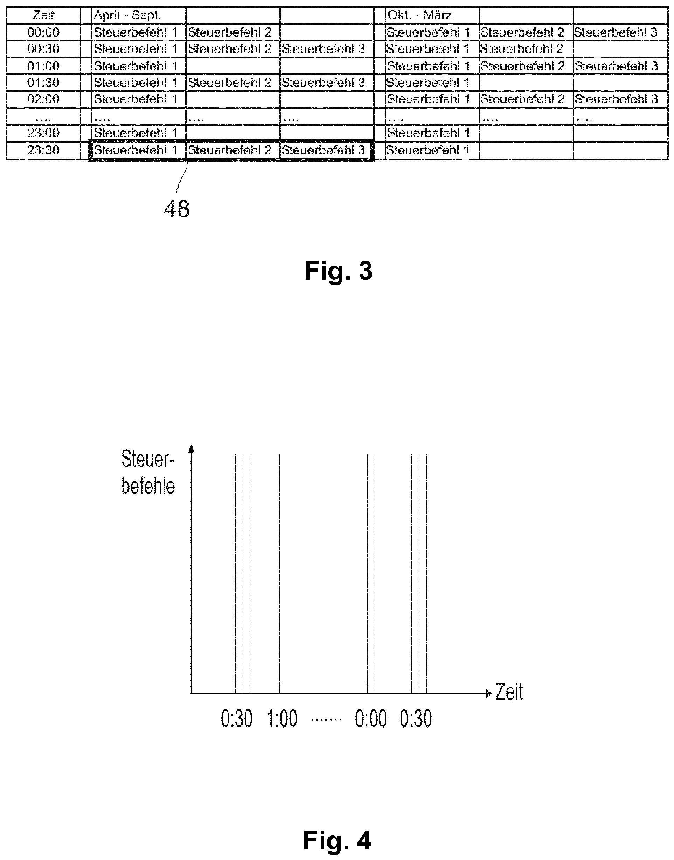

In Figur 3 sind Steuerbefehle gemäß der erfinderischen Idee in tabellarischer Form dargestellt. Zu einer bestimmten Uhrzeit werden bestimmte Steuerbefehle ausgeführt, die zu einem Segment 48 zusammengefasst sind. Die Daten, die auf dem Datenträger 26 abgelegt sind, können so aufgeteilt sein. Im dargestellten Beispiel sind drei Steuerbefehle zu einem Segment 48 zusammengefasst. Ein Steuerbefehl kann beispielsweise das Ein- oder Ausschalten der Leuchtmittel 14 oder des Detektors 36 sein.

Man erkennt, dass zwischen April und September zu einem bestimmten Zeitpunkt eine andere Anzahl von Befehlen ausgeführt wird als zwischen Oktober und März. Dies kann der unterschiedlichen Lichtverhältnissen der beiden Zeiträume geschuldet sein. Es wird jedoch immer der Steuerbefehl 1 ausgeführt, der beispielsweise das Einschalten des Detektors 36 bewirken kann. So ist immer eine Information vorhanden, ob sich eine Person im Umfeld der Leuchte 10 befindet oder nicht.

In Figur 4 ist der zeitliche Ablauf eines Teils der zwischen April und September ausgeführten Steuerbefehle graphisch dargestellt.

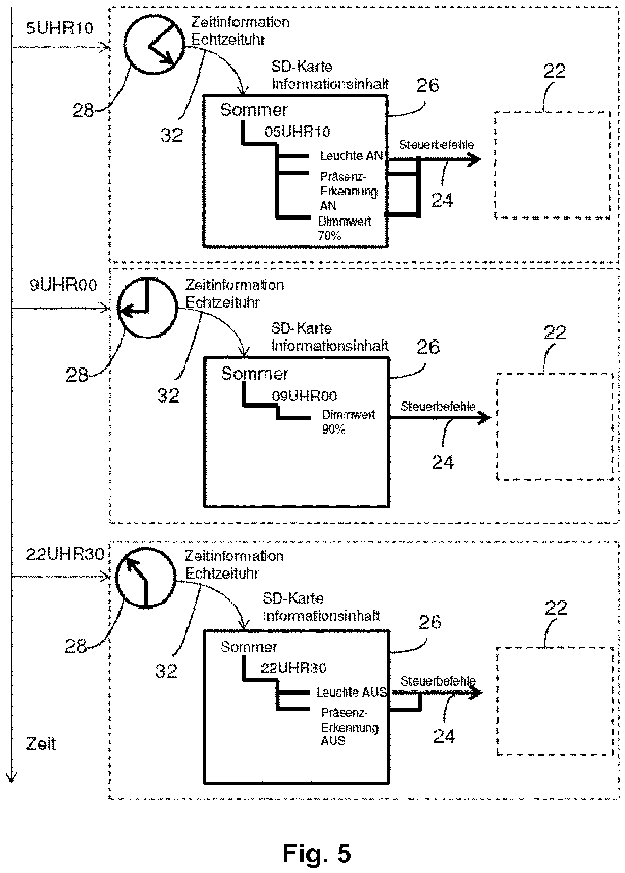

In Figur 5 ist ein Ausführungsbeispiel für einen möglichen Tagesablauf dargestellt, wie die Steuereinheit 22 über das Zeitmodul 28 samt Datenträger 26 Steuerbefehle über die Kommunikationseinrichtung 24 erhält. So ist auf dem mobilen Datenträger 26, der vorliegend eine SD-Karte ist, abgespeichert, dass um 05:10 Uhr die Leuchte eingeschaltet werden soll, eine Präsenzerkennung eingeschaltet werden soll und die Leuchte einen Dimmwert von 70 % ihres Maximalleuchtwerts aufweisen soll. Sobald das Zeitmodul 28 die Uhrzeit 05:10 Uhr mitteilt, werden über die Kommunikationseinrichtung 24 entsprechende Steuerbefehle an die Steuereinheit 22 gegeben. Die Steuereinheit 22 sorgt dann dafür, dass die Leuchte eingeschaltet wird, die Präsenzerkennung aktiv wird und die Leuchte mit 70 % Dimmwert brennt.

Auf der SD-Karte und damit dem Datenträger 26 ist darüber hinaus als nächster Stellwert programmiert, dass der Dimmwert um 09:00 Uhr auf 90 % erhöht werden soll. Liefert das Zeitmodul 28 das Zeitsignal 09:00 Uhr, so gelangt ein neuer Steuerbefehl über die Kommunikationseinrichtung 24 an die Steuereinheit 22, um die Leuchte, die in Figur 5 der besseren Übersichtlichkeit nicht dargestellt ist, in ihrem Lichtwert entsprechend zu erhöhen.

Schließlich sind auf dem Datenträger 26 noch weitere Stellinformationen gespeichert, nämlich dass die Leuchte um 22:30 Uhr ausgeschaltet werden soll, ebenso die Präsenzerkennung. Liefert das Zeitmodul 28 die Zeitinformation 22:30 Uhr, so gelangen über die Kommunikationseinrichtung 24 entsprechende Steuerbefehle an die Steuereinheit 22. Die Leuchte wird ausgeschaltet und die dortige Präsenzerkennung deaktiviert. Am nächsten Tag um 05:10 Uhr wird dann, wie oben erwähnt, die Leuchte entsprechend wieder eingeschaltet, die Präsenzerkennung aktiviert und die Leuchte so eingestellt, dass ein Helligkeitswert von 70 % der Maximalleuchtstärke herrscht.

### Bezugszeichenliste

- 10: Leuchte
- 12: Trägereinrichtung
- 14: Leuchtmittel
- 16: Leuchtenstange
- 18: Leuchtenfuß

- 20: Leuchtengehäuse
- 22: Steuereinheit
- 24: Kommunikationseinrichtung
- 26: Datenträger
- 28: Zeitmodul

- 30: Energiequelle
- 32: elektrische Leitung
- 33: portables Speichermedium
- 34: SD-Schacht
- 35: SD-Karte
- 36: Detektor
- 38: Übertragungseinrichtung

- 40, 401, 402: Nebenleuchte
- 42: Echtzeituhr
- 44: Masterleuchte
- 46: Empfangseinrichtung
- 48: Segment

## Patentansprüche

1. Leuchte (10) zum Ausleuchten eines Gebäudebereichs, insbesondere eines Büros, wobei die Leuchte umfasst:
- Leuchtmittel (14) zum Bereitstellen von farblich veränderbarem Licht,
- eine Trägereinrichtung (12), auf welcher die Leuchtmittel (14) angebracht sind,
- eine Steuereinheit (22) zur zeitabhängigen Steuerung der Leuchte (10), wobei die Steuereinheit (22) zum Ansteuern der Leuchtmittel (14) mit Steuerungsbefehlen eingerichtet ist,
- eine Stromquelle (30) oder einen Anschluss für eine Stromquelle, um die Leuchte (10) mit Energie zu versorgen,
- ein in oder an der Leuchte (10) angeordnetes Zeitmodul (28), das zum selbständigen Bereitstellen einer Zeitinformation, umfassend die aktuelle Uhrzeit und optional das aktuelle Datum, eingerichtet ist, und
- eine Kommunikationseinrichtung (24) zur Kommunikation zwischen einem Datenträger (26) und der Steuereinheit (22), wobei die Kommunikationseinrichtung (24) dazu eingerichtet ist, Daten, die auf dem Datenträger (26) gespeichert sind und die Zeitinformationen enthalten, nach Maßgabe der vom Zeitmodul (28) bereitgestellten Zeitinformation zur zeitabhängigen Steuerung der Leuchte (10) auszulesen und an die Steuereinheit (22) zu übertragen,
- wobei die Steuereinheit (22) weiter dazu eingerichtet ist, die in den Daten enthaltenen Zeitinformationen mit der vom Zeitmodul (28) bereitgestellten Uhrzeit zu synchronisieren und in Steuerbefehle umzuwandeln, wobei die zeitabhängige Steuerung der Leuchte (10) eine zeitabhängige Änderung der Farbe des von den Leuchtmitteln (14) abgegebenen Lichts beinhaltet,
**dadurch gekennzeichnet, dass** die Leuchte (10) weiter einen zum manuellen Ein- und Ausschalten der Leuchtmittel (14) eingerichteten Schalter umfasst,
wobei der Datenträger (26) ein portables Speichermedium ist und die Leuchte (10) derart eingerichtet ist, dass der Datenträger (26) mit ihr verbunden und von ihr getrennt werden kann.

2. Leuchte (10) nach Anspruch 1,
**dadurch gekennzeichnet, dass** die Kommunikationseinrichtung (24) einen SD-Schacht (34) zum Einbringen einer SD-Karte oder eine USB-Schnittstelle zum Anschließen eines USB-tauglichen Geräts umfasst.

3. Leuchte (10) nach einem der vorherigen Ansprüche, **dadurch gekennzeichnet, dass** die Leuchte (10) eine Übertragungseinrichtung (38) aufweist, mit welcher die Steuerbefehle zu einer Anzahl von Nebenleuchten (40) übertragbar sind, wobei die Nebenleuchten (40) mit den Steuerbefehlen ansteuerbar sind und eine mit der Übertragungseinrichtung (38) kommunizierende Empfangseinrichtung (46) zum Empfangen der Steuerbefehle aufweisen.

4. Leuchte (10) nach einem der Ansprüche 1 bis 3,
**dadurch gekennzeichnet, dass** das Zeitmodul (28) zum jahreszeitabhängigen Bereitstellen einer Uhrzeit vorgesehen ist.

5. Leuchte (10) nach einem der Ansprüche 1 bis 4,
**dadurch gekennzeichnet, dass** die Leuchte (10) mit Mitteln (36) zur Präsenzerkennung von Personen im Umfeld der Leuchte (10) ausgestattet ist und dass diese Mittel zur Präsenzerkennung deaktivierbar sind.

6. Beleuchtungssystem zum Ausleuchten eines Gebäudebereichs, insbesondere eines Büros, aufweisend eine Leuchte (10) nach Anspruch 3 oder einem der Ansprüche 4 und 5 in Abhängigkeit von Anspruch 3, und eine Anzahl von Nebenleuchten (40), die mittels der Leuchte (10) ansteuerbar sind, wobei die Nebenleuchten (40) eine mit der Übertragungseinrichtung (38) kommunizierende Empfangseinrichtung (46) aufweisen.

7. Verfahren zum Ausleuchten eines Gebäudebereichs, insbesondere eines Büros, mit einer Leuchte (10) nach einem der Ansprüche 1 bis 5, umfassend folgende Schritte:
- Verbinden des portablen Datenträgers (26) mit der Leuchte (10),
- Auslesen von Daten, die auf dem portablen Datenträger (26) gespeichert sind, mittels der Kommunikationseinrichtung (24) und Übertragen an die Steuereinheit (22),
- Synchronisieren von in den Daten enthaltenen Zeitinformationen mit der vom Zeitmodul (28) bereitgestellten Uhrzeit mittels der Steuereinheit (22),
- Umwandeln der Daten in Steuerbefehle mittels der Steuereinheit (22), und
- Ansteuern der Leuchtmittel (14) mittels der Steuereinheit (22) mit den Steuerbefehlen nach Maßgabe der vom Zeitmodul bereitgestellten Informationen,
wobei die Farbe des von den Leuchtmitteln abgegebenen Lichts zeitabhängig geändert wird.

8. Verfahren nach Anspruch 7 mit einer Leuchte (10) nach Anspruch 5, umfassend folgenden Schritt:
- Ausschalten der Leuchtmittel (14) mittels der Steuereinheit (22), sobald die Mittel (36) zur Präsenzerkennung die Abwesenheit von Personen festgestellt haben.

9. Verfahren nach Anspruch 7 mit einer Leuchte (10) nach Anspruch 3 oder nach Anspruch 8 mit einer Leuchte (10) nach Anspruch 5 in Abhängigkeit von Anspruch 3 umfassend folgende weitere Schritte:
- Übertragen der Steuerbefehle zu einer Anzahl von Nebenleuchten (40) mittels der Übertragungseinrichtung (38),
- Empfangen der Steuerbefehle mit einer mit der Übertragungseinrichtung (38) kommunizierenden Empfangseinrichtung (46), und
- Ansteuern von Nebenleuchten (40) mit den Steuerbefehlen.

## Claims

1. Lamp (10) for the illumination of an area of a building, in particular, an office, wherein the lamp comprises:
- illumination means (14) for the provision of color changeable light,
- a support device (12) on which the illumination means (14) are mounted,
- a control unit (22) for the time-dependent controlling of the lamp (10), wherein the control unit (22) is configured with control commands for controlling the illumination means (14),
- a current source (30) or a connection for a current source, for supplying the lamp (10) with energy,
- a time module (28) disposed in or on the lamp (10) that is configured to independently provide time information and, optionally, the current time of day, and
- a communication device (24) for the communication between a data carrier (26) and the control unit (22), wherein the communication device (24) is configured to read out data that is stored on the data carrier (26) and that contain time information, in accordance with the time information provided by the time module (28) for the time dependent controlling of the lamp (10) and to transmit it to the control unit (22),
- wherein the control unit (22) is further configured to synchronize the time information contained in the data with the time of day provided by the time module (28) and to change it into control commands,
- wherein the time-dependent controlling of the lamp (10) includes a time-dependent change in the color of the light emitted by the illumination means (14),
**characterized in that** the lamp (10) further comprises a switch for manually turning on and off the illumination means (14),
- wherein the data carrier (26) is a portable data memory and the lamp (10) is configured such that the data carrier (26) can be connected to and disconnected from it.

2. Lamp (10) in accordance with claim 1,
**characterized in that** the communication device (24) comprises an SD slot (34) for introducing an SD card or a USB interface for connecting a USB compatible device.

3. Lamp (10) in accordance with either of the preceding claims,
**characterized in that** the lamp (10) has a transmission device (38) that can transmit the control commands to a number of secondary lamps (40), wherein the secondary lamps (40) can be controlled by the control commands and comprise a reception device (46) that communicates with the transmission device (38) to receive the control commands.

4. Lamp (10) in accordance with any of claims 1 to 3,
**characterized in that** the time module (28) is provided in order to provide a seasonally dependent time of day.

5. Lamp (10) in accordance with any of claims 1 to 4,
**characterized in that** the lamp (10) is equipped with means (36) for recognizing the presence of people in the surrounding area of the lamp (10) and **in that** these means for recognizing presence can be deactivated.

6. Illumination system for illuminating an area of a building, in particular, an office, comprising a lamp (10) in accordance with claim 3 or with one of the claims 4 and 5 in dependency on claim 3, and a number of secondary lamps (40) that can be controlled by means of the lamp (10), wherein the secondary lamps (40) comprise a reception device (46) that communicates with the transmission device (38).

7. Method for illuminating an area of a building, in particular, an office, having a lamp (10) in accordance with any of claims 1 to 5, comprising the following steps:
- connecting the portable data carrier (26) to the lamps (10),
- reading out data that is stored on the portable data carrier (26) by means of the communication device (24) and transmitting these to the control unit (22),
- synchronizing the time information contained in the data with the time of day provided by the time module (28) by means of the control unit (22),
- transforming the data into control commands by means of the control unit (22), and
- controlling the illumination means (14) by means of the control unit (22) with the control commands in accordance with the information provided by the time module, wherein the color of the light emitted by the illumination means is time-dependently changed.

8. Method in accordance with claim 7, having a lamp (10) in accordance with claim 5, comprising the following steps:
- turning off the illumination means (14) by means of the control unit (22) upon determination, by the means (36) for presence detection, that people are present.

9. Method in accordance with claim 7, having a lamp (10) in accordance with claim 3 or in accordance with claim 8, having a lamp (10) in accordance with claim 5 in dependency on claim 3, comprising the following steps:
- transmitting the control commands to a number of secondary lamps (40) by means of the transmission device (38),
- receiving the control command with a reception device (46) that communicates with the transmission device (38), and
- controlling the secondary lamps (40) with the control commands.

## Revendications

1. Lampe (10) pour éclairer une zone d'immeuble, notamment d'un bureau,
lampe comprenant :
- des moyens d'éclairage (14) pour fournir une lumière de couleur variable,
- une installation de support (12) munie des moyens d'éclairage (14),
- une unité de commande (22) pour commander la lampe (10) en fonction du temps, l'unité de commande (22) pour commander les moyens d'éclairage (14) étant munie d'instructions de commande,
- une source de courant (30) ou un branchement pour une source de courant (30) pour alimenter la lampe (10) en énergie,
- un module d'horloge (28) dans ou sur la lampe (10) qui fournit automatiquement une information de temps comprenant l'heure actuelle et en option la date actuelle, et
- une installation de communication (24) pour la communication entre un support de données (26) et l'unité de commande (22),
l'installation de communication (24) étant conçue pour la communication entre un support de données (26) et l'unité de commande (22),
l'installation de communication (24) étant conçue pour lire les données enregistrées sur le support de données et obtenir les informations de temps selon l'indication de l'information de temps fournie par le module d'horloge (28) pour commander la lampe (10) en fonction du temps et transmettre à l'unité de commande (22),
- l'unité de commande (22) étant en outre conçue pour synchroniser l'information de temps contenue dans les données avec l'instant fourni par le module d'horloge (28) et transformer en instructions de
commande,
la commande (10) en fonction du temps de la lame comprenant une modification de la couleur de la lumière émise par les moyens d'éclairage (14) en fonction du temps, lampe (10) **caractérisée en ce qu'**elle comprend en outre :
un commutateur conçu pour la commutation manuelle en marche/arrêt des moyens d'éclairage (14),
le support de données (26) étant un support de mémoire portatif et la lampe (10) est conçue pour que le support de données (26) puisse être relié ou être séparé de la lampe.

2. Lampe (10) selon la revendication 1,
**caractérisée en ce que**
l'installation de communication (24) comporte un logement SD (34) pour introduire une carte SD ou une interface USB pour brancher un appareil à compatibilité USB.

3. Lampe (10) selon l'une des revendications précédentes,
**caractérisée en ce qu'**
elle (10) comprend une installation de transmission (38) pour transmettre des instructions de commande à un nombre de lampes auxiliaires (40), les lampes auxiliaires (40) se commandant avec les instructions de commande et une installation de réception (46) communiquant avec l'installation de transmission (38) pour recevoir les instructions de commande.

4. Lampe (10) selon l'une des revendications 1 à 3,
**caractérisée en ce que**
le module d'horloge (28) est prévu pour fournir un temps d'horloge dépendant de l'époque de l'année.

5. Lampe (10) selon l'une des revendications 1 à 4,
**caractérisée en ce qu'**
elle (10) est équipée de moyens (36) pour détecter la présence de personnes dans l'environnement de la lampe (10) et ces moyens de détection de présence peuvent être désactivés.

6. Système d'éclairage pour éclairer une zone de bâtiments, notamment un bureau comprenant une lampe (10) selon la revendication 3 ou l'une des revendications 4 et 5 en combinaison avec la revendication 3 et un nombre de lampes auxiliaires (40) commandées par la lampe (10),
les lampes auxiliaires (40) comportant une installation de réception (46) communiquant avec l'installation de transmission (38).

7. Procédé d'éclairage d'une zone d'immeubles, notamment d'un bureau avec une lampe (10) selon l'une des revendications 1 à 5, comprenant les étapes suivantes consistant à :
- relier le support de données, portatif (26) à la lampe (10),
- extraire des données enregistrées sur le support de données portatif (26) à l'aide de l'installation de communication (24) et les transmettre à l'unité de commande (22),
- synchroniser les informations de temps contenues dans les données avec l'instant de l'horloge fourni par le module d'horloge (28) à l'aide de l'unité de commande (22),
- transformer les données en instructions de commande par l'unité de commande (22), et
- commander les moyens d'éclairage (14) à l'aide de l'unité de commande (22) avec les instructions de commande selon l'indication des informations fournies par le module d'horloge,
la couleur de la lumière émise par les moyens d'éclairage variant en fonction du temps.

8. Procédé selon la revendication 7 avec une lampe (10) selon la revendication 5, comprenant les étapes suivantes consistant à :
- couper les moyens d'éclairage (14) par l'unité de commande (22) dès que les moyens (36) de détection de présence constatent l'absence de personnes.

9. Procédé selon la revendication 7, comprenant une lampe (10) selon la revendication 3, ou selon la revendication 8, avec une lampe (10) selon la revendication 5 en combinaison avec la revendication 3,
procédé comprenant les autres étapes suivantes consistant à :
- transmettre les instructions de commande à un nombre de lampes auxiliaires (40) par l'installation de transmission (38),
- recevoir les instructions de commande à l'aide d'une installation de réception (46) communicant avec l'installation de transmission (38), et
- commander les lampes auxiliaires (40) avec les instructions de commande.
